# EUROPÄISCHE PATENTSCHRIFT

(11) **EP 3 923 852 B1**
(45) Veröffentlichungstag und Bekanntmachung des Hinweises auf die Patenterteilung: **05.04.2023**
(21) Anmeldenummer: 20704288.8
(22) Anmeldetag: 07.02.2020
(51) Int. Cl.: A61C 7/10

(54) **ORTHODONTISCHE DEHNSCHRAUBE**
ORTHODONTIC EXPANSION SCREW
VIS D'EXPANSION ORTHODONTIQUE

(30) Priorität: 11.02.2019 DE 102019103348
(43) Veröffentlichungstag der Anmeldung: 22.12.2021
(73) Patentinhaber: Bernhard Förster GmbH, 75172 Pforzheim (DE)
(72) Erfinder: REGELMANN, Michael, 75245 Neulingen (DE)
(74) Vertreter: Twelmeier Mommer & Partner
(86) Internationale Anmeldenummer: PCT/EP2020/053201
(87) Internationale Veröffentlichungsnummer: WO 2020/165053

(56) Entgegenhaltungen:
- DE-A1- 4 338 986
- DE-A1-102014 213 900
- DE-B4-102007 002 040
- US-A- 4 354 832

## Beschreibung

Die Erfindung geht von einer orthodontischen Dehnschraube mit den im Oberbegriff des Patentanspruchs 1 angegebenen Merkmalen aus. Die Dokumente DE 10 2014 213900 A1, US 4 354 832 A, DE 10 2007 002040 B4 und DE 43 38 986 A1 offenbaren jeweils eine orthodontische Dehnschraube mit einer Hemmung, um zu erschweren bzw. verhindern, dass sich die Dehnschraube im Kiefer eines Patienten von selbst verstellt.

Zum Erschweren eines unbeabsichtigten Verdrehens der Spindel hat deren Betätigungsteil bei der aus DE 10 2007 002040 bekannten Dehnschraube einen von der Kreisform abweichenden Außenquerschnitt. Ein Metallband drückt in radialer Richtung auf den Betätigungsteil und wirkt dadurch als Reibungsbremse für die Spindel, welche die Spindel in jenen Winkelstellungen hält, in welchen wegen der von der Kreisform abweichenden Gestalt des Betätigungsteils das Metallband den geringsten Abstand von der Längsachse der Spindel einnimmt. Das Metallband ist bei der bekannten Dehnschraube mit ihren Enden an den beiden Geradführungsmitteln befestigt, insbesondere verschweißt. Das Metallband erzeugt eine wohldefinierte Hemmung, jedoch hat diese Lösung den Nachteil, ein gesondertes Bauteil zu erfordern, welches an den beiden Geradführungsmitteln befestigt werden muss, welche bei der bekannten Dehnschraube als zylindrische Stifte ausgebildet sind.

Aus der DE 10 2007 002 040 B4 ist es weiterhin bekannt, eine Hemmung dadurch zu verwirklichen, dass das Innengewinde des Dehnschraubenkörpers, in die ein Gewindeteil der Spindel eingreift, ein wenig verquetscht wird. Dadurch wird zwar ein gesondertes Bauteil vermieden, aber es ist nachteilig, dass sich das Ausmaß der auf diese Weise erzeugten Hemmung nur schwer reproduzieren lässt, so dass es innerhalb einer Serie von Dehnschrauben erhebliche Unterschiede in der Hemmung gibt.

Der vorliegenden Erfindung liegt die Aufgabe zugrunde, einen Weg aufzuzeigen, wie in einer orthodontischen Dehnschraube eine gut reproduzierbare Hemmung der Spindel in vorgegebenen Stellungen der Spindel verwirklicht werden kann, ohne dafür ein gesondertes Bauteil zu benötigen.

Diese Aufgabe wird durch eine orthodontische Dehnschraube mit den im Patentanspruch 1 angegebenen Merkmalen gelöst.

Eine auf dem gleichen Prinzip beruhende zweite Lösung der Aufgabe ist im Patentanspruch 2 angegeben.

Vorteilhafte Weiterbildungen der Erfindung sind Gegenstand der abhängigen Ansprüche.

Die Lösung gemäß dem Patentanspruch 1 erreicht eine wohldefinierte Hemmung der Spindel ohne ein gesondertes Bauteil und vermeidet den für dessen Montage andernfalls anfallenden Aufwand. Erreicht wird das dadurch, dass der wenigstens eine Gewindeteil der Spindel wenigstens eine sich in deren Längsrichtung erstreckende und in radialer Richtung offene Ausnehmung aufweist und dass die innere Oberfläche der Gewindebohrung des Körpers, in welchem der wenigstens eine Gewindeteil steckt, einen Vorsprung aufweist, welcher gegen den wenigstens einen Gewindeteil gerichtet ist und in einer Stellung der Spindel, in welcher er der wenigstens einen Ausnehmung zugewandt ist, in die Ausnehmung ragt, wohingegen er in Stellungen der Spindel, in welchen er keiner Ausnehmung im Gewindeteil zugewandt ist, gegen den Gewindeteil der Spindel drückt. Die gewollte Hemmung der Spindel erfolgt entgegen der Lehre der DE 10 2007 002 040 B4 nicht durch Krafteinwirkung auf das Betätigungsteil - den Spindelkopf -, sondern durch unmittelbare Einwirkung auf den Gewindeteil der Spindel. Die Einwirkung auf den Gewindeteil der Spindel erfolgt jedoch nicht einfach dadurch, dass der in der Gewindebohrung des Körpers ausgebildete Vorsprung dauernd mit gleichbleibender Kraft gegen das Gewinde der Spindel drückt und der Spindeldrehung eine gleichbleibende Reibungskraft entgegensetzt, sondern dadurch, dass der Vorsprung in die im Gewindeteil der Spindel ausgebildete Ausnehmung ragt. In der Ausnehmung muss der Vorsprung nicht auf den Gewindeteil der Spindel drücken, vorzugsweise tut er es jedoch, und zwar weniger stark als wenn er außerhalb der Ausnehmung gegen das Gewinde drückt. Infolgedessen steigt die Kraft, welche aufgebracht werden muss, um die Hemmung der Spindel zu überwinden, beim Drehen der Spindel progressiv an, bis der Vorsprung die Ausnehmung verlassen hat. Durch das Ausbilden der Ausnehmung hat das Gewinde von wenigstens einem Gewindeteil der Spindel keinen gleichbleibenden Außendurchmesser mehr. Dadurch wird erfindungsgemäß eine wohldefinierte und reproduzierbare Hemmung in Stellungen der Spindel erzielt, welche von der Lage der Ausnehmung im Gewindeteil abhängen, und es ist kein gesondertes Bauteil erforderlich, um die reproduzierbare Hemmung zu bewirken.

Die erfindungsgemäße Dehnschraube hat wenigstens zwei Körper, deren gegenseitiger Abstand durch eine Spindel veränderbar ist. Es gibt aber auch orthodontische Dehnschrauben, die nicht nur ein einziges Paar von Körpern aufweisen, deren gegenseitiger Abstand durch eine Spindel verändert werden kann, sondern die zwei oder drei Paare von Körpern haben, deren gegenseitiger Abstand jeweils durch eine gesonderte, zweite bzw. dritte, Spindel veränderbar ist. Eine solche Dehnschraube wird als Mehrsektorenschraube bezeichnet. In ihr sind die zwei oder drei Paare von Körpern zu einer Baugruppe verbunden. Der Schutz der Patentansprüche 1 und 2 soll Mehrsektorenschrauben einschließen. Deshalb ist in den Patentansprüchen 1 und 2 angegeben, dass die orthodontische Dehnschraube "wenigstens zwei Körper" hat.

Die im Patentanspruch 2 angegebene Lösung unterscheidet sich von der im Patentanspruch 1 angegebene Lösung dadurch, dass wenigstens ein Gewindeteil der Spindel anstelle einer sich in Längsrichtung erstreckenden und in radialer Richtung offenen Ausnehmung eine sich in deren Längsrichtung erstreckende Abflachung aufweist. Der Vorsprung, welcher in der Gewindebohrung des Körpers ausgebildet ist, in welchem sich der Gewindeteil der Spindel befindet, ist in den Stellungen der Spindel, in welchen deren Hemmung möglich sein soll, gegen die Abflachung gerichtet. Wenn die Spindel aus einer solchen gehemmten Stellung heraus, in welcher der Vorsprung, bezogen auf die Umfangsrichtung der Spindel, gegen die Mitte der Abflachung gerichtet ist, absichtlich verdreht wird, dann türmt sich der Rand der sich am Vorsprung vorbeidrehenden Abflachung vor dem Vorsprung auf, bis dieser auf den nicht abgeflachten Abschnitt des Gewindes gleitet. Dem entsprechend steigt die Kraft, welche aufgebracht werden muß, um die Hemmung der Spindel zu überwinden, ebenso wie bei der Lösung gemäß dem Patentanspruch 1, progressiv an, bis der Vorsprung den abgeflachten Bereich des Gewindeteils verlassen hat. Auch mit der zweiten Lösung der Aufgabe, welche der Erfindung zugrunde liegt, erzielt man eine definierte und reproduzierbare Hemmung, ohne dafür ein gesondertes Bauteil in der Dehnschraube zu benötigen, weil das Gewinde von wenigstens einem Gewindeteil der Spindel keinen gleichbleibenden Außendurchmesser mehr hat.

Wenn die orthodontische Dehnschraube eine Spindel mit zwei Gewindeteilen hat, welche in einander entgegengesetzte Richtungen vom Betätigungsteil ausgehen, dann können beide Körper der Dehnschraube in ihrer Gewindebohrung einen Vorsprung haben und beide Gewindeteile der Spindel eine sich in Längsrichtung der Spindel erstreckende Ausnehmung oder Abflachung haben. Grundsätzlich genügt es jedoch, wenn lediglich eines der Gewindeteile eine Ausnehmung oder eine Abflachung hat und dementsprechend nur einer der beiden Körper der Dehnschraube in seiner Gewindebohrung einen Vorsprung aufweist.

Außerhalb der Ausnehmung oder Abflachung des Gewindeteils der Spindel soll der Vorsprung auf das Gewinde des Gewindeteils drücken. Vorzugsweise berührt der Vorsprung die Spindel in jeder ihrer Stellungen, in der Ausnehmung und auf der Abflachung jedoch mit geringerem Druck oder drucklos, weil die Ausnehmung und die Abflachung gegenüber dem vollen Gewinde zurückspringen. Wenn der Vorsprung in jeder Stellung der Spindel gegen deren Gewindeteil drückt, hat das den Vorteil, dass die Spindel dann, wenn der Vorsprung gegen die Abflachung oder in die Ausnehmung drückt, kein Spiel hat.

Die Erfindung ist nicht auf eine besondere Art des Gewindes beschränkt.

Um das Gleiten des Vorsprungs auf dem Gewindeteil der Spindel zu erleichtern, ist er vorzugsweise konvex oder ballig ausgebildet und erstreckt sich in Längsrichtung der Spindel vorzugsweise über eine Länge, die größer ist als die Steigung des Gewindes der Spindel.

Die Ausnehmung bzw. Abflachung erstreckt sich auf dem Gewindeteil der Spindel zweckmäßigerweise über eine Länge, die ebenso lang ist wie die Länge, um welche die Körper der Dehnschraube durch Drehen der Spindel verstellt werden können. Vorzugsweise erstrecken sich die Ausnehmung bzw. die Abflachung über die gesamte Länge des wenigstens einen Gewindeteils bzw. beider Gewindeteile.

Auf dem jeweiligen Gewindeteil kann mehr als nur eine Ausnehmung oder Abflachung vorhanden sein. Je mehr Ausnehmungen oder Abflachungen in Umfangrichtung verteilt auf dem Gewindeteil oder den Gewindeteilen der Spindel vorhanden sind, umso mehr Stellungen der Spindel gibt es, in denen das unabsichtliche Verdrehen der Spindel verhindert oder erschwert werden kann. Vorzugsweise sind zwei einander diametral gegenüberliegende Ausnehmungen oder Abflachungen vorhanden oder vier Ausnehmungen oder Abflachungen, welche einander paarweise diametral gegenüberliegen. Sind zwei Ausnehmungen oder Abflachungen vorhanden, dann kann die Stellung der Spindel nach jeweils einer halben Umdrehung in einer Stellung verharren, in welcher ein unbeabsichtigtes Verdrehen der Spindel verhindert oder erschwert ist. Wenn vier Ausnehmungen oder Abflachungen auf dem Gewindeteil vorhanden sind, dann gelingt das bereits nach jeweils einer viertel Umdrehung. In diesem Fall hat das Gewindeteil die Gestalt eines Vierkants mit abgerundeten Kanten, in deren Rundungen die verbliebenen Gewindegänge der Spindel liegen. Je nach der konkreten Ausbildung der Abflachung oder Ausnehmung können sich die Gewindegänge mit abnehmender Gewindetiefe in die Abflachung bzw. Ausnehmung hinein erstrecken. Das ist auch bevorzugt, um sicherzustellen, dass zwischen dem Gewindeteil und der ihn aufnehmenden Gewindebohrung ein hinreichender Eingriff zwischen diesen besteht, um die bei der orthodontischen Behandlung in der Dehnschraube auftretenden Kräfte aufzunehmen bzw. zu übertragen.

Die Möglichkeit, die Spindel nach jeder Vierteldrehung in einer Stellung zu halten, in welcher ein unbeabsichtigtes Verdrehen der Spindel verhindert oder erschwert ist, lässt sich auch erreichen, wenn die Gewindeteile der Spindel nur zwei einander diametral gegenüberliegende Ausnehmungen oder Abflachungen haben, nämlich dann, wenn die Ausnehmungen bzw. Abflachungen auf dem einen Gewindeteil relativ zu den Ausnehmungen bzw. Abflachungen auf dem anderen Gewindeteil der Spindel um einen Umfangswinkel von 90° gegeneinander versetzt sind.

Der in der Gewindebohrung des einen Körpers oder beider Körper der Dehnschraube vorhandene Vorsprung ist vorzugsweise als Einbuchtung des betreffenden Körpers der Dehnschraube ausgebildet. Eine solche Einbuchtung kann reproduzierbar durch einen Prägevorgang erzeugt werden. Durch Kontrolle des Vorschubweges eines die Prägung bewirkenden Prägestempels kann die Tiefe der Einbuchtung und damit die Höhe des Vorsprungs im Inneren der Gewindebohrung des Körpers mit geringen Maßtoleranzen erzeugt werden

Drei Ausführungsbeispiele der erfindungsgemäßen Dehnschraube sind in den beigefügten Zeichnungen schematisch dargestellt. Gleiche oder einander entsprechende Teile der beiden Dehnschrauben sind mit übereinstimmenden Bezugszahlen bezeichnet.
Figur 1 zeigt eine Dehnschraube in einer Draufsicht mit einer Spindel mit zwei Gewindeteilen, von denen einer vierfach abgeflacht ist, mit der Spindel in einer Sperrstellung,
Figur 2 zeigt den Längsschnitt A-A durch die Dehnschraube,
Figur 3 zeigt die Ansicht auf jenes Ende der Dehnschraube, an welchem sich das Ende des abgeflachten Gewindeteils befindet,
Figur 4 zeigt den Längsschnitt B-B durch die Dehnschraube,
Figur 5 zeigt den Querschnitt C-C durch die Dehnschraube,
Figur 6 zeigt als Detail die Spindel in einer Draufsicht,
Figur 7 zeigt die Ansicht auf jenes Ende der Spindel, welches dem abgeflachten Gewindeteil abgewandt ist,
Figur 8 zeigt die Ansicht auf das gegenüberliegende Ende der Spindel, wo sich das Ende des abgeflachten Gewindeteils befindet,
Figur 9 zeigt eine Draufsicht auf die Dehnschraube mit der Spindel in einer Schaltstellung,
Figur 10 zeigt den Längsschnitt D-D durch die Dehnschraube,
Figur 11 zeigt eine Ansicht auf jenes Ende der Dehnschraube, an welchem sich das Ende des abgeflachten Gewindeteils befindet,
Figur 12 zeigt den Längsschnitt E-E durch die Dehnschraube,
Figur 13 zeigt den Querschnitt F-F durch die Dehnschraube,
Figur 14 zeigt eine Dehnschraube in einer Draufsicht mit einer Spindel mit zwei Gewindeteilen, von denen einer vier Ausnehmungen hat, die einander paarweise gegenüberliegen, mit der Spindel in einer Sperrstellung,
Figur 15 zeigt den Längsschnitt A-A durch die Dehnschraube in Figur 14,
Figur 16 zeigt die Ansicht auf jenes Ende der Dehnschraube, an welchem sich das Ende des mit Ausnehmungen versehenen Gewindeteils befindet,
Figur 17 zeigt den Längsschnitt B-B durch die Dehnschraube gemäß Figur 16,
Figur 18 zeigt den Querschnitt C-C durch die Dehnschraube gemäß Figur 17,
Figur 19 zeigt als Detail die Spindel der Dehnschraube in Figur 14 in einer Draufsicht,
Figur 20 zeigt die Ansicht auf jenes Ende der Spindel aus Figur 19, welches dem mit Ausnehmungen versehenen Gewindeteil abgewandt ist,
Figur 21 zeigt die Ansicht auf das gegenüberliegende Ende der Spindel aus Figur 19, an welchem sich das Ende des mit Ausnehmungen versehenen Gewindeabschnitts befindet,
Figur 22 zeigt eine Draufsicht auf die Dehnschraube aus Figur 14 mit der Spindel in einer Schaltstellung,
Figur 23 zeigt den Längsschnitt D-D durch die Dehnschraube gemäß Figur 22,
Figur 24 zeigt eine Ansicht auf jenes Ende der Dehnschraube gemäß Figur 22, an welchem sich das Ende des mit Ausnehmungen versehenen Gewindeteils befindet,
Figur 25 zeigt den Längsschnitt E-E durch die Dehnschraube gemäß Figur 24,
Figur 26 zeigt den Querschnitt F-F durch die Dehnschraube gemäß Figur 22,
Figur 27 zeigt eine Dehnschraube in einer Draufsicht, bei welcher die Spindel zwei Gewindeteile hat, von denen jedes zwei einander diametral gegenüberliegende Ausnehmungen hat, wobei die Ausnehmungen im einen Gewindeteil gegenüber den Ausnehmungen im anderen Gewindeteil um einen Winkel von 90° versetzt sind, und sich die Spindel mit einem ihrer beiden Gewindeteile in einer Sperrstellung befindet,
Figur 28 zeigt den Längsschnitt A-A durch die Dehnschraube aus Figur 27,
Figur 29 zeigt die Ansicht auf jenes Ende der Dehnschraube aus Figur 27,
welches sich in der Darstellung der Figur 27 unten befindet,
Figur 30 zeigt den Längsschnitt B-B durch die Dehnschraube gemäß Figur 29,
Figur 31 zeigt den Querschnitt C-C durch die Dehnschraube gemäß Figur 27,
Figur 32 zeigt als Detail eine Draufsicht auf die Spindel der Dehnschraube aus

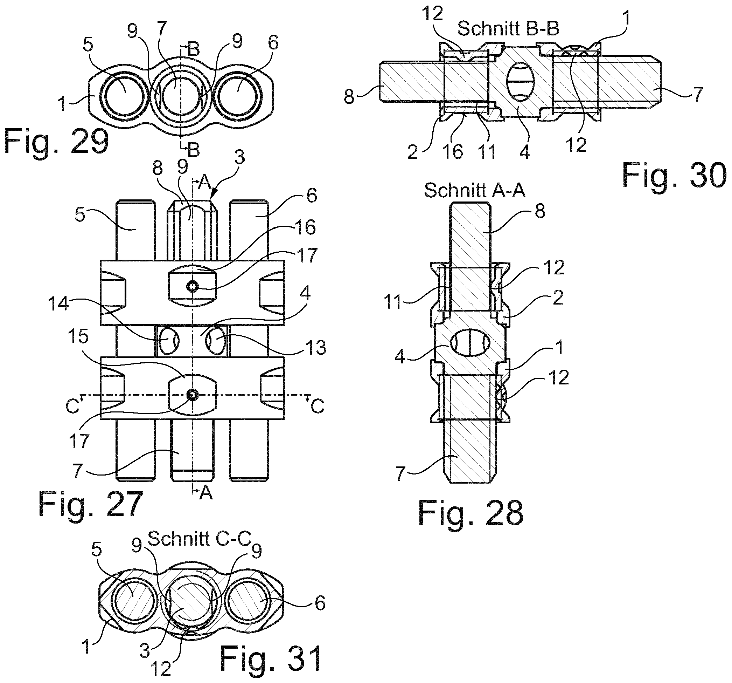

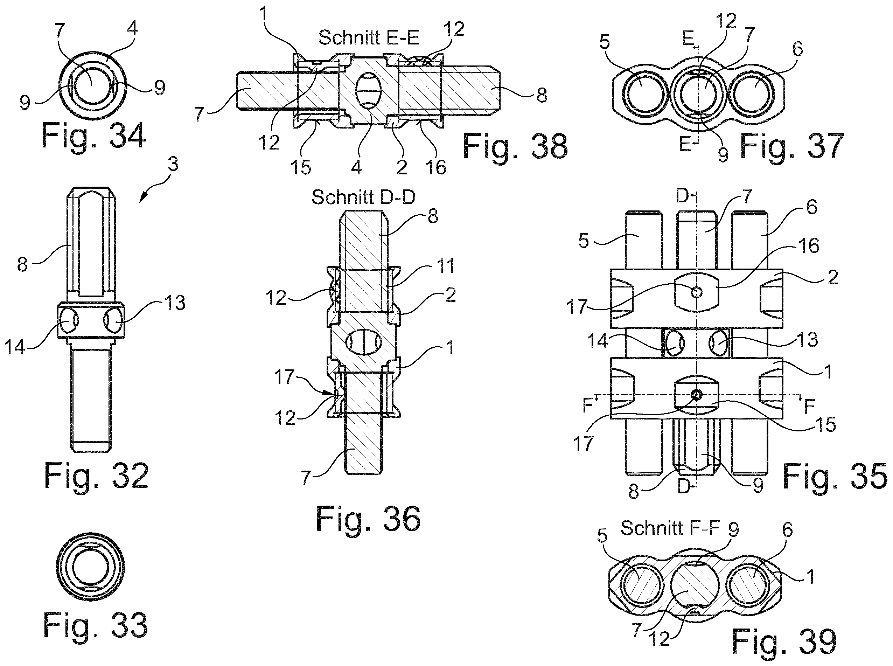

Figur 27, jedoch in einer Lage wie in Figur 35,
Figur 33 zeigt die Ansicht auf jenes Ende der Spindel aus Figur 32, welches sich in der Darstellung der Figur 32 oben befindet,
Figur 34 zeigt die Ansicht auf das gegenüberliegende Ende der Spindel aus Figur 32,
Figur 35 zeigt eine Draufsicht auf die Dehnschraube aus Figur 27, in welcher die Spindel aus der in Figur 27 gezeigten Stellung um 90° verdreht ist,
Figur 36 zeigt den Längsschnitt D-D durch die Dehnschraube gemäß Figur 35,
Figur 37 zeigt eine Ansicht auf jenes Ende der Dehnschraube aus Figur 35, welches sich in der Darstellung der Figur 35 unten befindet,
Figur 38 zeigt den Längsschnitt E-E durch die Dehnschraube gemäß Figur 37, und
Figur 39 zeigt den Querschnitt F-F durch die Dehnschraube gemäß Figur 35.

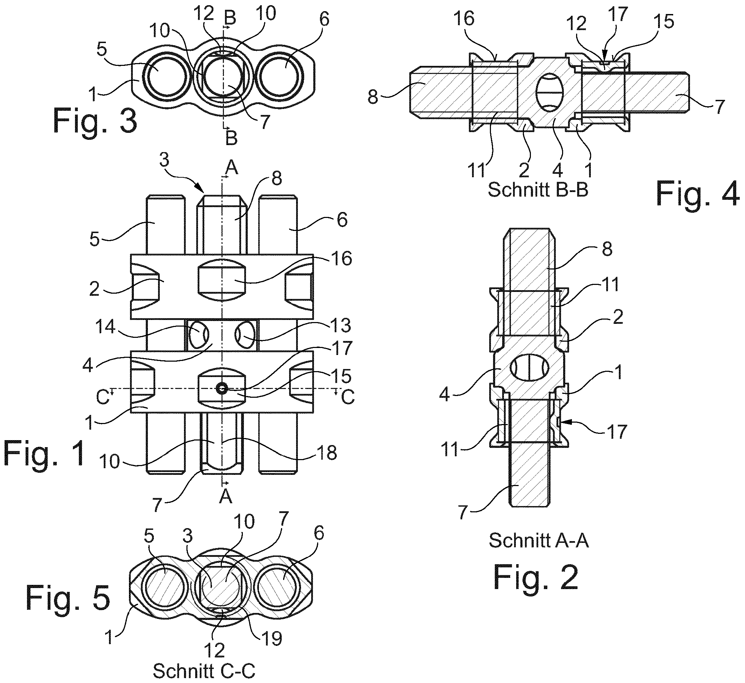

Die in den Figuren 1 bis 13 dargestellte Dehnschraube hat zwei vorzugsweise gleich ausgebildete Körper 1 und 2, deren gegenseitiger Abstand mittels einer Spindel 3 veränderbar ist, die mittig einen Betätigungsteil 4 hat, von welchem in einander entgegengesetzter Richtung zwei Gewindeteile mit entgegengesetztem Windungssinn ausgehen. Der erste Gewindeteil 7 ist im ersten Körper 1 und der zweite Gewindeteil 8 ist im zweiten Körper 2 drehbar gelagert. Zu diesem Zweck befindet sich in jedem der beiden Körper 1 und 2 eine durchgehende Gewindebohrung 11, in welchen hinein jeweils einer der beiden Gewindeteile 7 und 8 gedreht ist. Dementsprechend fluchten die beiden Gewindebohrungen 11 miteinander und haben, den beiden Gewindeteilen 7 und 8 entsprechend, entgegengesetzten Windungssinn. Die Steigung der Gewinde auf den beiden Gewindeteilen 7 und 8 und in den Gewindebohrungen 11 stimmt überein.

Zu beiden Seiten der Spindel 3 sind zwei zylindrische Führungsstifte 5 und 6 vorgesehen, die in dazu passenden, paarweise miteinander fluchtenden, durchgehenden Bohrungen der beiden Körper 1 und 2 stecken. Die Führungsstifte 5 und 6 bilden Geradführungsmittel, welche die beiden Körper 1 und 2 unter Vermeidung einer Relativdrehung der beiden Körper 1 und 2 beim Verändern ihres Abstands entlang zweier zueinander paralleler Führungsachsen führen.

Nicht beide Führungsstifte 5 und 6 sind zwingend vorhanden. Geeignete Geradführungsmittel können prinzipiell auch von der Spindel 3 selbst und einem einzigen, zur Spindel 3 parallelen Führungsstift gebildet werden, jedoch sind Ausführungsformen mit zwei Führungsstiften wegen einer symmetrischen Krafteinleitung der von der Spindel 3 ausgehenden Kraft in die beiden Körper 1 und 2 bevorzugt.

Prinzipiell ist es ferner auch möglich, anstelle einer Spindel 3 mit zwei Gewindeteilen 7 und 8 eine Spindel mit nur einem einzigen Gewindeteil zu verwenden und dabei die Spindel nur in einem der beiden Körper in eine Gewindebohrung zu drehen und die Spindel mit dem anderen Körper der Dehnschraube drehbar, aber unverschieblich, zu verbinden, insbesondere dadurch, dass man den Betätigungsteil der Spindel drehbar in einer Kammer eines der beiden Körper der Dehnschraube lagert, aus welcher Kammer der einzige Gewindeteil der Spindel herausragt und in die Gewindebohrung des anderen Körpers der Dehnschraube gedreht ist.

Im ersten Ausführungsbeispiel gemäß den Figuren 1 bis 13 hat der Betätigungsteil 4 zwei sich unter einem rechten Winkel schneidende Querbohrungen 13 und 14, die insbesondere in den Figuren 1, 6, 9, 10 und 12 zu sehen sind. Zum Verdrehen der Spindel 3 kann in die Bohrungen ein Verstellwerkzeug, beispielsweise ein Stift, eingeführt werden, den man als Hebel zum Verdrehen der Spindel 3 benutzen kann. Verdreht man den Betätigungsteil 4, ändert sich der Abstand der beiden Körper 1 und 2, die dabei auf den Führungsstiften 5 und 6 gleiten, sodass die beiden Körper 1 und 2 gerade geführt werden und eine Relativdrehung der beiden Körper 1 und 2 gegeneinander verhindert wird.

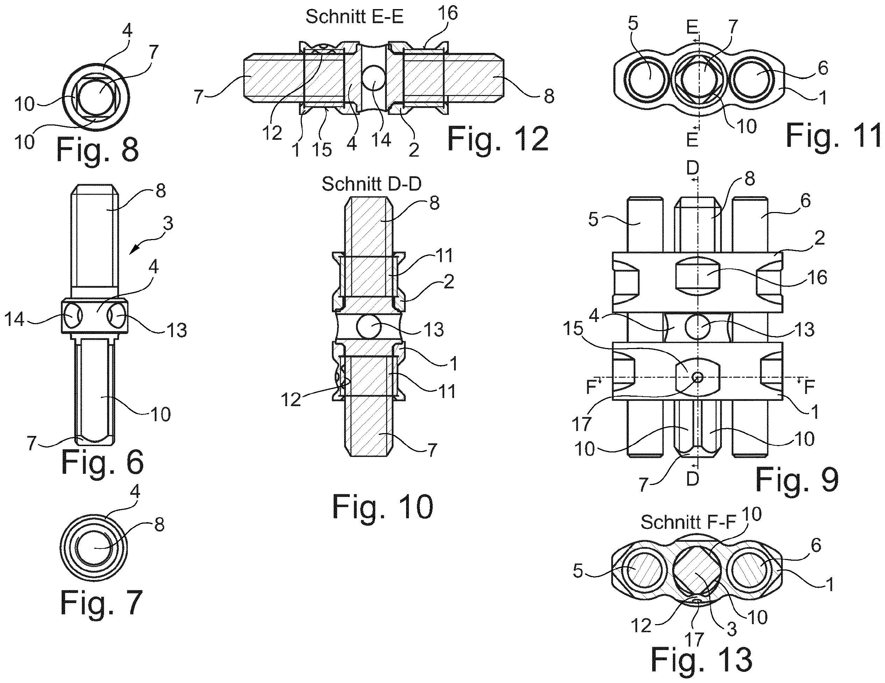

Damit sich die Dehnschraube im Mund eines Patienten, dem sie für eine kieferorthopädische Behandlung eingesetzt wurde, nicht von selbst verstellt, ist in der Dehnschraube eine Einrichtung ausgebildet, welche ein unbeabsichtigtes Verdrehen der Spindel 3 relativ zu den beiden Körpern 1, 2 in beiden Drehrichtungen der Spindel 3 unter den im Mund auftretenden Einwirkungen auf die Dehnschraube verhindert oder wenigstens erschwert. Zu diesem Zweck ist einer der beiden Gewindeteile, nämlich der erste Gewindeteil 7, auf voller Länge in der Weise abgeflacht, dass er bei Blick in Längsrichtung der Spindel 3 die Gestalt eines Quadrats mit abgerundeten Ecken erhält, siehe insbesondere die Figuren 3 und 8. Die Gewindegänge des ersten Gewindeteils 7 erstrecken sich deshalb nicht mehr vollständig um diesen herum, sondern beschränken sich im Wesentlichen auf den Bereich der noch vorhandenen Kanten des durch das Abflachen des ersten Gewindeteils 7 entstandenen Gestalt eines Vierkants mit gerundeten "Kanten".

In den beiden Körpern 1 und 2 befindet sich über der Spindel 3 jeweils eine Vertiefung 15 beziehungsweise 16. In der Vertiefung 15 über dem ersten Gewindeteil 7 der Spindel 3 ist eine Mulde 17 ausgebildet, die durch einen Prägevorgang gebildet ist, indem die Vertiefung 15 an ihrer tiefsten Stelle, über der Längsachse des Gewindeteils 7 mittels eines Prägestempels eingedrückt worden ist. Durch diesen Prägevorgang ist in der Gewindebohrung 11 im ersten Körper 1 unter der Mulde 17 ein Vorsprung 12 entstanden, siehe die Figuren 2 bis 4, 10, 12 und 13. Die Mulde 17, der Vorsprung 12 und die Abflachungen 10 sind in den Figuren nicht maßstäblich dargestellt, sondern nur prinzipiell, um ihr Wirkungsprinzip zu verdeutlichen.

Die Figuren 1 bis 5 zeigen die Spindel 3 in einer Stellung, in welcher der Vorsprung 12, welcher eine ballige Kontur hat, den ersten Gewindeteil 7 der Spindel 3 auf einer Mittellinie 18 berührt, welche in Figur 1 mit der Schnittlinie A-A zusammenfällt. Diese Stellung wird nachfolgend als Sperrstellung bezeichnet. Wenn man die Spindel 3 aus dieser Sperrstellung herausdrehen will, türmt sich der Rand der Abflachung 10 vor dem Vorsprung 12 auf und setzt der Drehung der Spindel 3 eine hemmende Kraft entgegen, die zunimmt, bis die nächste Rundung 19 des ersten Gewindeteils 7 den Vorsprung 12 erreicht. Diese Stellung der Spindel 3 ist in den Figuren 10 bis 13 dargestellt und wird nachfolgend als Schaltstellung bezeichnet, weil aus dieser heraus die Spindel 3 rechtsherum oder linksherum in die nächste Sperrstellung gedreht werden kann.

Der Widerstand, der beim Verdrehen der Spindel 3 aus einer Sperrstellung in eine Schaltstellung überwunden werden muss, kann ein unbeabsichtigtes Verdrehen der Spindel 3 verhindern.

Bei dem in den Figuren 1 bis 13 dargestellten ersten Ausführungsbeispiel einer erfindungsgemäßen Dehnschraube gelangt die Spindel, ausgehend von einer Sperrstellung, durch eine Drehung um jeweils 90° in die nächste Sperrstellung, sodass der Abstand der beiden Körper 1 und 2 der Dehnschraube vom Kieferorthopäden durch Drehung der Spindel um jeweils 90° verändert werden kann, wobei die daraus folgende Veränderung des Abstandes der beiden Körper 1 und 2 von der Steigung des Gewindes der Spindel 3 abhängt.

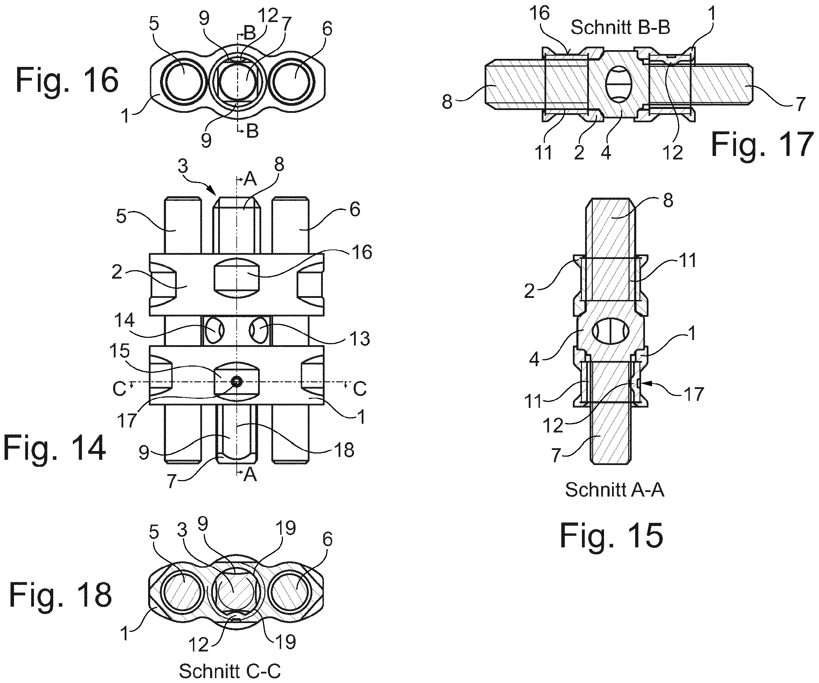

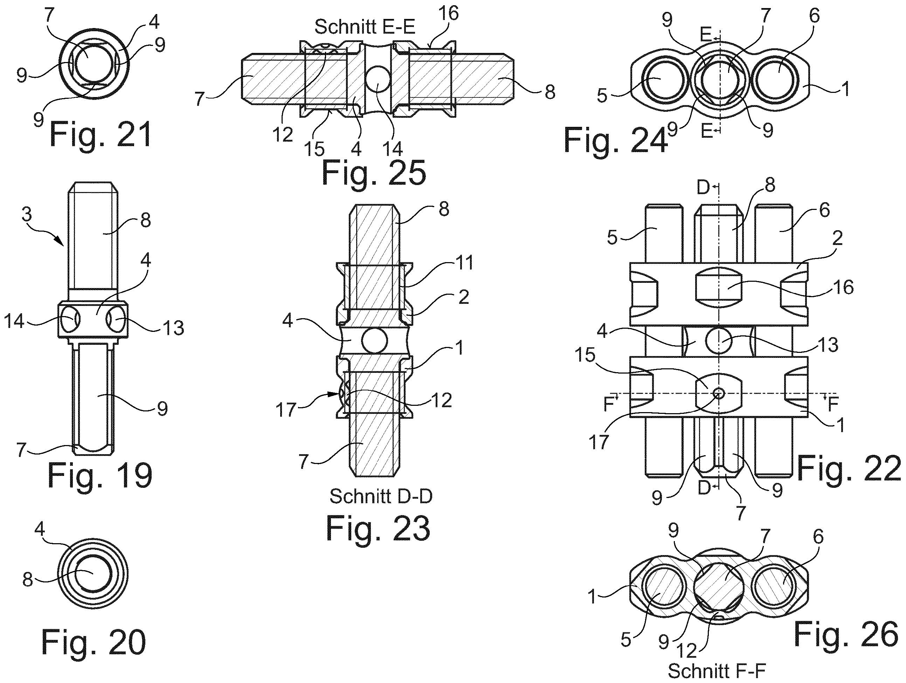

Das in den Figuren 14 bis 29 dargestellte zweite Ausführungsbeispiel einer erfindungsgemäßen Dehnschraube unterscheidet sich von dem in den Figuren 1 bis 13 dargestellten ersten Ausführungsbeispiel nur darin, dass anstelle von Abflachungen 10 des ersten Gewindeteils 7, die durch eine ebene Fläche begrenzt sind, konkave Flächen ausgebildet sind, sodass der erste Gewindeteil 7 vier sich in dessen Längsrichtung erstreckende Ausnehmungen 9 aufweist, in welche ein in der Gewindebohrung 11 des ersten Körpers 1 gebildeter Vorsprung 12 höher sein kann als im ersten Ausführungsbeispiel. Dadurch kann der Widerstand, den die Spindel 3 überwinden muss, wenn sie aus ihrer Sperrstellung (Figur 16) herausgedreht wird, größer sein als im ersten Ausführungsbeispiel. Infolgedessen ist bei einer Dehnschraube gemäß dem zweiten Ausführungsbeispiel eine stärkere Hemmung der Spindel 3 erzielbar als bei einer Dehnschraube gemäß dem ersten Ausführungsbeispiel.

Abgesehen davon, dass im zweiten Ausführungsbeispiel am ersten Gewindeteil 7 Ausnehmungen 9 anstelle von Abflachungen 10 vorgesehen sind, stimmen die beiden Ausführungsbeispiele überein, sodass wegen der Einzelheiten des zweiten Ausführungsbeispiels auf die Beschreibung des ersten Ausführungsbeispiels zurückgegriffen werden kann.

Das in den Figuren 27 bis 39 dargestellte dritte Ausführungsbeispiel einer erfindungsgemäßen Dehnschraube unterscheidet sich von dem zweiten Ausführungsbeispiel nur darin, dass an dem ersten Gewindeteil 7 nicht vier Ausnehmungen 9, sondern nur zwei einander diametral gegenüberliegende Ausnehmungen 9 ausgebildet sind, und dass zwei weitere einander diametral gegenüberliegende Ausnehmungen 9 an dem zweiten Gewindeteil 8 ausgebildet und so angeordnet sind, dass sie gegen die Ausnehmungen 9 im ersten Gewindeteil 7 in Umfangsrichtung um 90° versetzt sind. Hinzu kommt, dass nicht nur im ersten Körper 1, sondern auch im zweiten Körper 2 an entsprechender Stelle durch Einprägen einer Mulde 17 auch in der Gewindebohrung 11 des zweiten Körpers 2 ein Vorsprung 12 gebildet ist. Diese dritte Ausführungsform der Dehnschraube hat den Vorteil, dass auf beiden Gewindeteilen 7 und 8 mehr vom Gewinde erhalten geblieben ist als im ersten und zweiten Ausführungsbeispiel auf dem ersten Gewindeteil 7, sodass das Gewinde des ersten Gewindeteils 7 größere Kräfte aufnehmen kann und beide Gewindeteile 7 und 8 ungefähr gleich belastet werden. Erhalten geblieben ist der Vorteil des ersten und zweiten Ausführungsbeispiels, dass die Spindel 3 von Sperrstellung zu Sperrstellung lediglich um 90° verdreht werden muss.

### Bezugszeichenliste

- 1: erster Körper
- 2: zweiter Körper
- 3: Spindel
- 4: Betätigungsteil
- 5: Geradführungsmittel, Führungsstift
- 6: Geradführungsmittel, Führungsstift
- 7: Gewindeteil
- 8: Gewindeteil
- 9: Ausnehmung
- 10: Abflachung
- 11: Gewindebohrung
- 12: Vorsprung
- 13: Querbohrung
- 14: Querbohrung
- 15: Vertiefung
- 16: Vertiefung
- 17: Mulde
- 18: Mittellinie
- 19: Rundung

## Patentansprüche

1. Orthodontische Dehnschraube
mit wenigstens zwei Körpern (1, 2), deren gegenseitiger Abstand mittels einer Spindel (3) veränderbar ist, die an beiden Körpern (1, 2) angreift, wobei die Spindel (3) ein Betätigungsteil (4) aufweist, von welchem wenigstens ein Gewindeteil (7, 8) ausgeht, welcher in eine Gewindebohrung (11) eines der beiden Körper (1, 2) gedreht ist,
mit Geradführungsmitteln (5, 6), die mit beiden Körpern (1, 2) in Eingriff stehen und sie unter Vermeidung einer Relativdrehung der Körper (1, 2) beim Verändern ihres gegenseitigen Abstands entlang zweier zueinander paralleler Führungsachsen führen,
und mit einer Einrichtung zum Verhindern oder Erschweren eines unbeabsichtigten Verdrehens der Spindel (3) relativ zu den Körpern (1, 2),
wobei der wenigstens eine Gewindeteil (7, 8) der Spindel (3) wenigstens eine sich in deren Längsrichtung erstreckende und in radialer Richtung offene Ausnehmung (9) aufweist,
**dadurch gekennzeichnet,**
**dass** die innere Oberfläche der Gewindebohrung (11) des Körpers (1, 2), in welchem der wenigstens eine Gewindeteil (7, 8) steckt, einen Vorsprung (12) aufweist, welcher gegen den wenigstens einen Gewindeteil (7, 8) gerichtet ist und in einer Stellung der Spindel (3), in welcher er der wenigstens einen Ausnehmung (9) zugewandt ist, in die Ausnehmung (9) ragt, wohingegen er in Stellungen der Spindel (3), in welchen er keiner Ausnehmung (9) zugewandt ist, gegen den wenigstens einen Gewindeteil (7, 8) drückt.

2. Orthodontische Dehnschraube
mit wenigstens zwei Körpern (1, 2), deren gegenseitiger Abstand mittels einer Spindel (3) veränderbar ist, die an beiden Körpern (1, 2) angreift, wobei die Spindel (3) ein Betätigungsteil (4) aufweist, von welchem wenigstens ein Gewindeteil (7, 8) ausgeht, welcher in eine Gewindebohrung (11) eines der beiden Körper (1, 2) gedreht ist,
mit Geradführungsmitteln (5, 6), die mit beiden Körpern (1, 2) in Eingriff stehen und sie unter Vermeidung einer Relativdrehung der Körper (1, 2) beim Verändern ihres gegenseitigen Abstands entlang zweier zueinander paralleler Führungsachsen führen,
und mit einer Einrichtung zum Verhindern oder Erschweren eines unbeabsichtigten Verdrehens der Spindel (3) relativ zu den Körpern (1, 2),
**dadurch gekennzeichnet, dass** der wenigstens eine Gewindeteil (7, 8) der Spindel (3) wenigstens eine sich in deren Längsrichtung erstreckende Abflachung (10) aufweist und dass die innere Oberfläche Gewindebohrung (11) des Körpers (1, 2), in welchem der wenigstens eine Gewindeteil (7, 8) steckt, einen Vorsprung (12) aufweist, welcher gegen den wenigstens einen Gewindeteil (7, 8) gerichtet ist, und in Stellungen der Spindel (3), in welchen er keiner Abflachung (10) zugewandt ist, gegen den wenigstens einen Gewindeteil (7, 8) drückt, wohingegen er in Stellungen der Spindel (3), in welchen er gegen eine Abflachung (10) gerichtet ist, die Abflachung (10) nicht oder mit weniger Druck berührt als in den Stellungen, in welchen er keiner Abflachung (10) zugewandt ist.

3. Dehnschraube nach Anspruch 1 oder 2, **dadurch gekennzeichnet,**
**dass** der Vorsprung (12) den Gewindeteil (7, 8) der Spindel (3) in jeder ihrer Stellungen berührt.

4. Dehnschraube nach Anspruch 3, **dadurch gekennzeichnet, dass** der Vorsprung (12) an dem Gewindeteil (7, 8) der Spindel (3) in jeder ihrer Stellungen mit Druck anliegt.

5. Dehnschraube nach einem der vorstehenden Ansprüche, **dadurch gekennzeichnet, dass** der Vorsprung (12) konvex ausgebildet ist.

6. Dehnschraube nach Anspruch 5, **dadurch gekennzeichnet, dass** der Vorsprung (12) ballig ausgebildet ist.

7. Dehnschraube nach einem der vorstehenden Ansprüche, **dadurch gekennzeichnet, dass** die Erstreckung des Vorsprungs (12) in Längsrichtung der Spindel (3) größer ist als in Umfangsrichtung der Spindel (3).

8. Dehnschraube nach einem der vorstehenden Ansprüche, **dadurch gekennzeichnet, dass** die Erstreckung des Vorsprungs (12) in Längsrichtung der Spindel (3) größer ist als die Steigung des Gewindes der Spindel (3).

9. Dehnschraube nach einem der vorstehenden Ansprüche, **dadurch gekennzeichnet, dass** sich die wenigstens eine Ausnehmung (9) bzw. Abflachung (10) über die gesamte Länge des wenigstens einen Gewindeteils (7, 8) erstreckt.

10. Dehnschraube nach einem der vorstehenden Ansprüche, **dadurch gekennzeichnet, dass** auf dem wenigstens einen Gewindeteil (7, 8) zwei oder vier Ausnehmungen (9) bzw. Abflachungen (10) vorhanden sind, welche sich paarweise diametral gegenüber liegen.

11. Dehnschraube nach Anspruch 10, **dadurch gekennzeichnet, dass** das wenigstens eine Gewindeteil (7, 8) als ein Vierkant mit abgerundeten Kanten ist, in welche das Gewinde ausgebildet ist.

12. Dehnschraube nach Anspruch 11, **dadurch gekennzeichnet, dass** sich das Gewinde des wenigstens einen Gewindeteils (7, 8) mit einer geringeren Tiefe der Gewindegänge wenigstens zu einem Teil auch in die wenigstens eine Ausnehmung (9) bzw. Abflachung (10) des wenigstens einen Gewindeteils (7, 8) erstreckt.

13. Dehnschraube nach einem der vorstehenden Ansprüche, **dadurch gekennzeichnet, dass** die Spindel (3) zwei Gewindeteile (7,8) hat, welche sich vom Betätigungsteil (4) ausgehend in einander entgegengesetzte Richtungen erstrecken und jeweils zwei einander diametral gegenüberliegende Ausnehmungen (9) bzw. Abflachungen (10) haben, wobei die Ausnehmungen (9) bzw. Abflachungen (10) auf dem einen Gewindeteil (7) relativ zu den Ausnehmungen (9) bzw. Abflachungen (10) auf dem anderen Gewindeteil (8) um die Längsachse der Spindel (3) um einen Umfangswinkel von 90° gegeneinander versetzt sind.

14. Dehnschraube nach einem der vorstehenden Ansprüche, **dadurch gekennzeichnet, dass** der Vorsprung (3) als Einbuchtung wenigstens eines der beiden Körper (1, 2) ausgebildet ist.

15. Dehnschraube nach einem der vorstehenden Ansprüche, **dadurch gekennzeichnet, dass** die zum Verhindern oder Erschweren des Verdrehens vorgesehene Einrichtung in beiden Drehrichtungen der Spindel (3) wirksam ist.

## Claims

1. An orthodontic expansion screw comprising
at least two bodies (1, 2), the mutual distance of which can be changed by means of a spindle (3), which engages both bodies (1, 2), wherein the spindle (3) has an actuating part (4), from which at least one threaded part (7, 8) proceeds, which is engaged in a threaded bore (11) of one of the two bodies (1, 2),
straight-line guiding means (5, 6), which engage both bodies (1, 2) and guide them along two mutually parallel guiding axes, avoiding a relative rotation of the bodies (1, 2) given a change in their mutual distance, and
a device for preventing or impeding an inadvertent r of the spindle (3) relative to the bodies (1, 2),
wherein the at least one threaded part (7, 8) of the spindle (3) has at least one recess (9) that extends in its longitudinal direction and is open in a radial direction,
**characterized in that** the inner surface of the threaded bore (11) of the body (1, 2) in which the at least one threaded part (7, 8) is inserted has a projection (12), which is directed against the at least one threaded part (7, 8) and, in a position of the spindle (3) in which it faces the at least one recess (9), protrudes into the recess (9), whereas it presses against the at least one threaded part (7 8) in positions of the spindle (3) in which it does not face any recess (9).

2. An orthodontic expansion screw comprising
at least two bodies (1, 2), the mutual distance of which can be changed by means of a spindle (3), which engages both bodies (1, 2), wherein the spindle (3) has an actuating part (4), from which at least one threaded part (7, 8) proceeds, which is engaged in a threaded bore (11) of one of the two bodies (1, 2),
straight-line guiding means (5, 6), which engage both bodies (1, 2) and guide them along two mutually parallel guiding axes, avoiding a relative rotation of the bodies (1, 2) given a change in their mutual distance, and
a device for preventing or impeding an inadvertent rotation of the spindle (3) relative to the bodies (1, 2),
**characterized in that** the at least one threaded part (7, 8) of the spindle (3) has at least one flattened portion (10) extending in its longitudinal direction, and that the inner surface of the threaded bore (11) of the body (1, 2) in which the at least one threaded part (7, 8) is inserted has a projection (12), which is directed against the at least one threaded part (7, 8) and, in positions of the spindle (3) in which it does not face any flattened portion (10), presses against the at least one threaded part (7, 8), whereas in positions of the spindle (3) in which it is directed against a flattened portion (10), it does not touch the flattened portion (10), or does so with less pressure than in positions in which it does not face a flattened portion (10)

3. The expansion screw according to claim 1 or 2, **characterized in that** the projection (12) touches the threaded portion (7, 8) of the spindle (3) in each of its positions.

4. The expansion screw according to claim 3, **characterized in that** the projection (12) abuts against the threaded part (7, 8) of the spindle (3) under a pressure in each of its positions.

5. The expansion screw according to any one of the preceding claims, **characterized in that** the projection (12) is convex in design.

6. The expansion screw according to claim 5, **characterized in that** the projection (12) is spherical in design.

7. The expansion screw according to any one of the preceding claims, **characterized in that** the extension of the protrusion (12) is greater in the longitudinal direction of the spindle (3) than in the circumferential direction of the spindle (3).

8. The expansion screw according to any one of the preceding claims, **characterized in that** the extension of the protrusion (12) is greater in the longitudinal direction of the spindle (3) than the pitch of the thread of the spindle (3).

9. The expansion screw according to any one of the preceding claims, **characterized in that** the at least one recess (9) or flattened portion (10) extends over the entire length of the at least one threaded part (7, 8).

10. The expansion screw according to any one of the preceding claims, **characterized in that** two or four recesses (9) or flattened portions (10) are present on the at least one threaded part (7, 8), which lie diametrically opposite each other in pairs.

11. The expansion screw according to claim 10, **characterized in that** at least one threaded part (7, 8) is designed as a square with rounded corners, in which the thread is formed.

12. The expansion screw according to claim 11, **characterized in that** the thread of the at least one threaded part (7, 8) also extends with a smaller thread depth at least partially into the at least one recess (9) or flattened portion (10) of the at least one threaded part (7, 8).

13. The expansion screw according to any one of the preceding claims, **characterized in that** the spindle (3) has two threaded parts (7, 8), which extend in mutually opposite directions proceeding from the actuating part (4), and each have two recesses (9) or flattened portions (10) lying diametrically opposite each other, wherein the recesses (9) or flattened portions (10) on the one threaded part (7) are offset to each other by a circumferential angle of 90° relative to the recesses (9) or flattened portions (10) on the other threaded part (8) around the longitudinal axis of the spindle (3).

14. The expansion screw according to any one of the preceding claims, **characterized in that** the projection (3) is designed as an indentation of at least one of the two bodies (1, 2).

15. The expansion screw according to any one of the preceding claims, **characterized in that** the device for preventing or impeding rotation acts in both rotational directions of the spindle (3).

## Revendications

1. Vis d'expansion orthodontique
pourvue d'au moins deux corps (1, 2), dont l'écart mutuel est variable au moyen d'une broche (3) qui s'engage sur les deux corps (1, 2), la broche (3) comportant une pièce d'actionnement (4) à partir de laquelle part au moins une partie filetée (7, 8), laquelle est vissée dans un taraudage (11) de l'un des deux corps (1, 2),
pourvue de moyens de guidage rectilignes (5, 6), qui sont en engagement avec les deux corps (1, 2) et qui les guident le long de deux axes de guidage parallèles l'un à l'autre, en évitant une rotation relative des corps (1, 2), lors de la variation de leur écart mutuel,
et pourvue d'un dispositif destiné à éviter ou à compliquer une rotation intempestive de la broche (3) par rapport aux corps (1, 2),
l'au moins une partie filetée (7, 8) de la broche (3) comportant au moins un évidement (9) s'étendant dans la direction longitudinale de celle-ci et ouvert en direction radiale,
**caractérisée en ce que**
la surface intérieure du taraudage (11) du corps (1, 2), dans laquelle est insérée l'au moins une partie filetée (7, 8) comporte une saillie (12), laquelle est dirigée vers l'au moins une partie filetée (7, 8) et qui dans une position de la broche (3), dans laquelle elle fait face à l'au moins un évidement (9), saillit dans l'évidement (9), alors que dans des positions de la broche (3), dans lesquelles elle ne fait face à aucune évidement (9), appuie contre l'au moins une partie filetée (7, 8).

2. Vis d'expansion orthodontique
pourvue d'au moins deux corps (1, 2), dont l'écart mutuel est variable au moyen d'une broche (3) qui s'engage sur les deux corps (1, 2), la broche (3) comportant une pièce d'actionnement (4) à partir de laquelle part au moins une partie filetée (7, 8), laquelle est vissée dans un taraudage (11) de l'un des deux corps (1, 2),
pourvue de moyens de guidage rectilignes (5, 6), qui sont en engagement avec les deux corps (1, 2) et qui les guident le long de deux axes de guidage parallèles l'un à l'autre, en évitant une rotation relative des corps (1, 2), lors de la variation de leur écart mutuel,
et pourvue d'un dispositif destiné à éviter ou à compliquer une rotation intempestive de la broche (3) par rapport aux corps (1, 2),
**caractérisée en ce que** l'au moins une partie filetée (7, 8) de la broche (3) comporte au moins un méplat (10) s'étendant dans la direction longitudinale de celle-ci et **en ce que** la surface intérieure du taraudage (11) du corps (1, 2), dans laquelle est insérée l'au moins une partie filetée (7, 8) comporte une saillie (12), laquelle est dirigée vers l'au moins une partie filetée (7, 8) et qui dans une position de la broche (3), dans laquelle elle ne fait face à aucun méplat (10), appuie contre l'au moins une partie filetée (7, 8), alors que dans des positions de la broche (3), dans lesquelles elle fait face à un méplat (10) ne touche pas le méplat (10) ou avec moins de pression que dans les positions dans lesquelles elle ne fait face à aucun méplat (10).

3. Vis d'expansion selon la revendication 1 ou 2, **caractérisée en ce que** la saillie (12) touche la partie filetée (7, 8) de la broche (3) dans chacune de ses positions.

4. Vis d'expansion selon la revendication 3, **caractérisée en ce que** la saillie (12) est pressé avec une pression à la partie filetée (7, 8) de la broche (3) dans chacune de ses positions.

5. Vis d'expansion selon l'une quelconque des revendications précédentes, **caractérisée en ce que** la saillie (12) est conçue de forme convexe.

6. Vis d'expansion selon la revendication 5, **caractérisée en ce que** la saillie (12) est conçue de forme bombée.

7. Vis d'expansion selon l'une quelconque des revendications précédentes, **caractérisée en ce que** l'extension de la saillie (12) dans la direction longitudinale de la broche (3) est supérieure à celle dans la direction périphérique de la broche (3).

8. Vis d'expansion selon l'une quelconque des revendications précédentes, **caractérisée en ce que** l'extension de la saillie (12) dans la direction longitudinale de la broche (3) est supérieure au pas du filetage de la broche (3).

9. Vis d'expansion selon l'une quelconque des revendications précédentes, **caractérisée en ce que** l'au moins un évidement (9) ou méplat (10) s'étend sur toute la longueur de l'au moins une partie filetée (7, 8).

10. Vis d'expansion selon l'une quelconque des revendications précédentes, **caractérisée en ce que** sur l'au moins une partie filetée (7, 8) sont présents deux ou quatre évidements (9) ou méplats (10), qui sont placés en vis-à-vis par paire.

11. Vis d'expansion selon la revendication 10, **caractérisée en ce que** l'au moins une partie filetée (7, 8) est conçue sous la forme d'un quadrilatère à arêtes arrondies dans lesquelles est conçu le filetage.

12. Vis d'expansion selon la revendication 11, **caractérisée en ce que** le filetage de l'au moins une partie filetée (7, 8) s'étend également avec une profondeur moindre du filet, au moins en partie dans l'au moins un évidement (9) ou méplat (10) de l'au moins une partie filetée (7, 8).

13. Vis d'expansion selon l'une quelconque des revendications précédentes, **caractérisée en ce que** la broche (3) possède deux parties filetées (7, 8), qui en partant de la pièce d'actionnement (4) s'étendent dans des directions mutuellement opposées et qui possèdent chacune deux évidements (9) ou méplats (10) placés diamétralement en vis-à-vis, les évidements (9) ou méplats (10) sur l'une partie filetée (7) étant décalés l'un par rapport à l'autre relativement aux évidements (9) ou méplats (10) de l'autre partie filetée (8) autour de l'axe longitudinal de la broche (3) de la valeur d'un angle périphérique de 90°.

14. Vis d'expansion selon l'une quelconque des revendications précédentes, **caractérisée en ce que** la saillie (3) est conçue sous la forme d'une indentation d'au moins l'un des deux corps (1, 2).

15. Vis d'expansion selon l'une quelconque des revendications précédentes, **caractérisée en ce que** le dispositif prévu pour éviter ou compliquer la rotation est actif dans les deux directions de rotation de la broche (3).
